# EUROPEAN PATENT APPLICATION

(11) **EP 1 721 501 A1**
(43) Date of publication of application: **15.11.2006**
(21) Application number: 06112950.8
(22) Date of filing: 24.04.2006
(51) Int. Cl.: A01B 59/04

(54) **Hydraulic stabiliser for lower hitch arm**

(30) Priority: 09.05.2005 GB 0509324
(71) Applicant: CNH U.K. Ltd., Basildon Essex S14 3AD (GB)
(72) Inventor: Callan, Jim, Grays, Essex RM17 5SU (GB); Casbolt, Peter, South Benfleet, Essex SS7 5SW (GB); Ellis, Vince, Corringham, Essex SS17 7JZ (GB)
(74) Representative: CNH IP Department

(57) **Abstract**

In an agricultural vehicle having a hitch with two lower arms (10) that are pivotable about a vertical axis, a stabiliser (50) connected to only one of the two lower arms for controlling lateral movement of the two lower arms (10). The stabiliser (50) comprises a hydraulic jack having an actuating rod (60) connected to a double-acting piston separating two variable volume working chambers which are connected to communicate with one another through a selectively operable valve (64).

## Description

The present invention relates to a hydraulic stabiliser for the lower arms of a three point hitch of an agricultural vehicle such as a tractor.

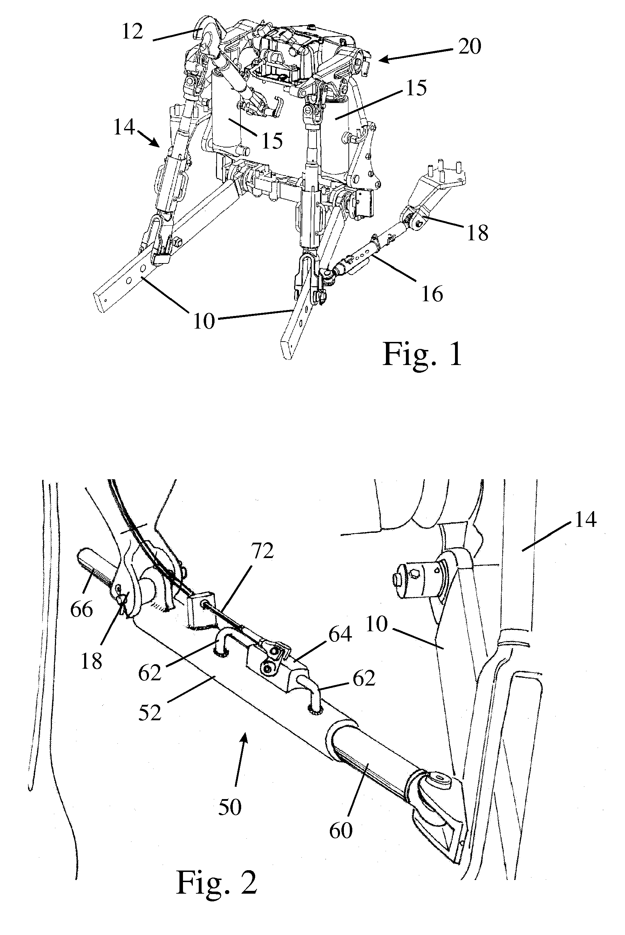

Tractors are commonly fitted at their rear end and sometimes also at their front ends with a hitch to allow an implement to be coupled to the tractor. Figure 1 of the accompanying drawings shows a three-point hitch of a tractor which is more fully described in US Patent No. 6,769,496. The three-point hitch, which may for example be used to couple a plough for towing by the tractor (only the rear end 20 of which is shown in the drawing), is so called because it comprises a first attachment point on an upper arm 12 and two further attachments points on two lower arms 10. The lower arms 10 can be lowered and raised by means of hydraulic jacks 15 acting through an adjustable linkage 14 to lower and raise the towed implement and the upper arm can also be adjusted to alter the inclination of the implement.

In addition to being pivotable about a horizontal axis for the purpose of raising and lowering a towed implement, the lower arms are also capable of a limited range of pivotal movement about a vertical axis.

When towing a plough with its shears in the ground, one should allow free lateral movement of the lower arms of the hitch so that the plough should follow the path of least resistance on encountering an obstacle. On the other hand, on reaching the end of a row, while the tractor is being turned around, the plough has to be raised out of the ground and, when so raised, the lower arms of the hitch must be locked. Failure to lock the lower arms can result in the plough moving sideways unpredictably and can even cause the tractor to topple.

For this reason, it is known to attach a stabiliser 16, as shown in Figure 1, to brace the lower arms against lateral movement under certain conditions. The stabiliser is pivotably connected at one end to a fixed anchoring point 18 on the tractor and at its opposite end to one of the lower arms 10 of the hitch.

Figure 1 shows a mechanically locked stabiliser 16, but it is also known from US 6,203,488 and US 6,283,488, which are believed to represent the closes prior art to the present invention, to use two single-acting hydraulic jacks, connected one to each of the two lower arms of a three-point hitch, to control their lateral movement. In the latter patents, the arms are termed steering arms and the jacks are connected to a pressure supply which allows the implement to be steered. The jacks also act as stabilisers as they can lock the movement of the lower arms of the hitch.

The latter US patents teach two hydraulic jacks that are connected in the same circuit to one another so that they may operate in tandem and this necessitates the use of long hydraulic lines and complex valving which add to the implementation cost.

The present invention seeks therefore to provide a simpler and less costly manner of hydraulically stabilising the lateral movement of the lower arms of a hitch.

According to the present invention, there is provided an agricultural vehicle having a hitch with two lower arms that are pivotable about a vertical axis and which in use are coupled to an implement, and a stabiliser connected to only one of the two lower arms for controlling lateral movement of the two lower arms, wherein the stabiliser comprises a hydraulic jack having an actuating rod connected to a double-acting piston separating two variable volume working chambers which are connected to communicate with one another through a selectively operable valve.

When the valve connecting the two working chambers is open, fluid can flow between the two working chambers, thereby allowing the piston and the lower arms of the hitch to move in both directions. Closing of the valve on the other hand will cause a hydraulic lock preventing movement of the piston and the lower arms of the hitch in either direction.

If the through flow cross section of the valve when it is opened is small, the jack will act as a damper so that lateral movement of the lower arms of the hitch will encounter some resistance. If desired, the valve may therefore be continuously variable rather than an on-off valve to allow the degree of damping to be controlled.

The valve may be manually operated by the vehicle operator through a mechanical linkage formed of levers or a Bowden cable. It is however preferred for the valve to be electrically operated, such as by means of a motor or a solenoid. An electrically operated valve offers the advantage that its operation may be automated during a headland turning sequence, so that the hitch arms are locked automatically against lateral movement when a plough is raised.

In one embodiment of the invention, the piston of the jack has faces of equal size. In this case, the hydraulic circuit of the jack can readily be self-contained and sealed since an increase in the volume of one of the working chambers will always be matched by an equal decrease in the volume of the other working chamber. Equal size faces on the opposite sides of the piston can be achieved by the use of a stepped piston or by connecting a dummy rod of the same size as the actuating rod to the opposite side of the piston.

Alternatively, the piston may be a differential piston with faces of different size. In this case, if a buffer fluid reservoir or accumulator is provided to take up or supply the net difference between the change in volume of the two working chambers during a displacement of the piston, then the hydraulic circuit may once again be filled and sealed.

In both embodiments of the invention, there is no requirement for an external pressurised supply of hydraulic fluid and the entire hydraulic stabiliser can therefore be formed as a self-contained unit requiring no more than an electrical or mechanical control connection, such as a wire or a Bowden cable, to set the position of the valve.

The stabiliser of the invention is effectively a variable rate damper, which may either have two settings or be continuously variable between end positions in which the lower hitch arms are freed and locked, respectively.

A damper only acts to resist movement and cannot therefore be used to steer the implement. If a steering force is required, then one may provide one or more springs to bias the lower hitch arms into a central position. If desired, a biasing spring may be combined with the double acting jack in a single unit. In such an embodiment of the invention, the combined spring and hydraulic jack would resemble a McPherson strut, as used in the suspensions of motor vehicles.

The invention will now be described further, by way of example, with reference to the accompanying drawings, in which:
Figure 1 is, as earlier described, a diagram showing a conventional three-point hitch with a known mechanical stabiliser,
Figure 2 is a diagram showing a hydraulic stabiliser of the invention,
Figure 3 is a schematic section through the hydraulic stabiliser of Figure 2, and
Figure 4 is a schematic section similar to that of Figure 3 showing a hydraulic stabiliser of an alternative embodiment of the invention.

Referring now to Figure 2, the lower arm 10, the linkage 14 and the anchoring point 18 are the same as previously described by reference to Figure 1. In the present invention, a double acting hydraulic jack 50 is connected between a fixed anchoring point 18 and only one of the two lower arms of the hitch. As the lower arms 10 are both connected to the towed implement, they will always move in unison and provided that movement is controlled in both directions it suffices to provide a hydraulic stabiliser 50 on only one of the two lower arms 10.

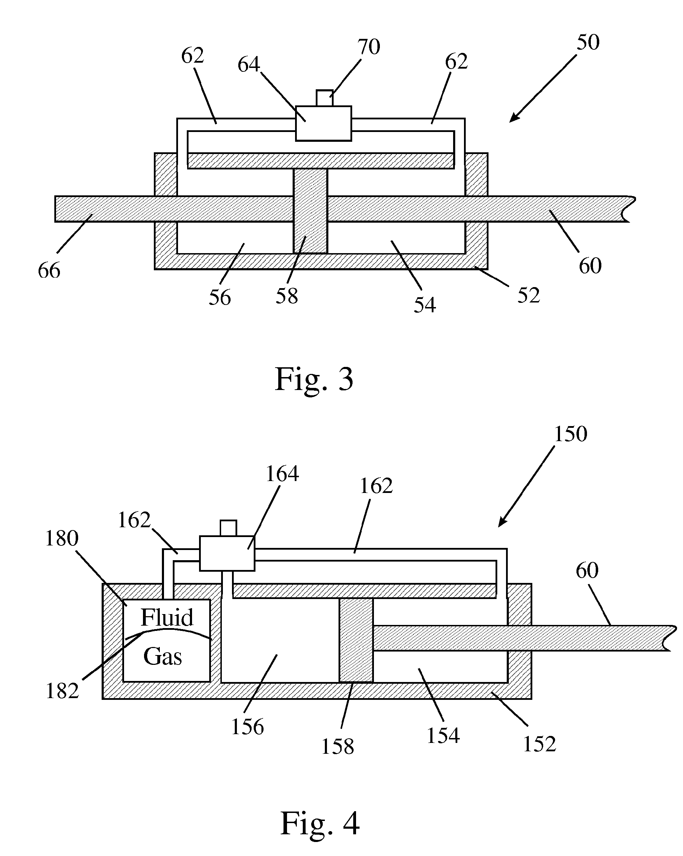

The jack 50 of Figure 2, which is shown in section in Figure 3, comprises a cylinder 52 within which there is reciprocably mounted a double acting piston 58 which divides the interior of the cylinder 52 into two variable volume working chambers 54 and 56. The cylinder 52 is itself pivotably connected to the anchoring point 18 and an actuating rod 60 extending from one side of the piston 58 is pivotably connected to one of the lower hitch arms 10.

The two working chambers 54 and 56 communicate with one another through an external pipe 62, the flow through which is controlled by a valve 64.

In the embodiments of Figure 3, a dummy rod 66 is connected on the opposite side of the piston 58 to ensure that the two working chambers have the same cross sectional area. As a result, the changes in volume of the two working chambers 54 and 56 when the piston moves are identical and the hydraulic circuit may therefore be sealed.

The valve 64 is represented in Figure 3 as being operated by a solenoid 70 but, as shown in Figure 2, it may be mechanically operated by means of a Bowden cable 72. When the valve 64 is fully open, fluid can flow freely between the two working chambers 54 and 56, so that the lower hitch arms 10 are allowed to move from side to side. When the valve 64 is closed fully, the jack 50 is hydraulically locked and no movement of the lower hitch arms 10 can occur.

While the valve 64 may be a two position valve, it is preferred for it to be continuously variable or at least to have some intermediate positions in which a throttled flow of fluid is allowed between the working chambers 54 and 56 of the jack 50 to permit damped movement of the lower hitch arms 10.

Figure 4 shows a section similar to that of Figure 3 of an alternative embodiment of the invention which avoids the need for the dummy rod 66. In Figure 4, like parts have been designated by reference numerals augmented by 100.

In this case, the piston 158 in the cylinder 152 is a differential piston because the face connected to the actuating rod 160 is smaller than the opposite face. Consequently, when the piston moves to the left as viewed, the reduction in the volume of the working chamber 156 is greater than the increase in volume of the working chamber 154. To prevent the hydraulic lock which would occur if the dummy rod 66 were simply omitted from the embodiment of Figure 3, the surplus fluid is diverted to a reservoir 180 or drawn from the same reservoir when the piston 158 is moved to the right, as viewed. While the reservoir may be open to atmospheric pressure, in the embodiment of Figure 4 it is shown as being part of an accumulator where the fluid is contained within a sealed chamber closed by a diaphragm or bellows 182. The gas acting on the opposite side of the diaphragm 182 may itself be contained in an enclosed chamber, in which case it will act as a spring, or it may optionally be vented to atmosphere.

The valve 164 in this case has three ports connected by three pipes 162 to the two working chambers 154 and 156 and the reservoir 180 and when open it allows all three ports to communicate with one another.

The double acting hydraulic jacks 50 and 150 only act to resist or prevent movement of the lower hitch arms 10. If it is desired to apply a steering force to these arms, then springs may be used in combination with the jack to bias the lower hitch arms 10 into a central position.

## Claims

1. An agricultural vehicle having a hitch (20) with two lower arms (10) that are pivotable about a vertical axis and which in use are coupled to an implement, and a stabiliser connected to only one of the two lower arms for controlling lateral movement of the two lower arms(10), **characterised in that** the stabiliser comprises a hydraulic jack (50) having an actuating rod (60) connected to a double-acting piston (58) separating two variable volume working chambers (54, 56) which are connected to communicate with one another through a selectively operable valve (64).

2. An agricultural vehicle as claimed in claim 1, **characterised in that** the valve (64) is a continuously variable valve allowing controlled damping of the movement of the lower hitch arms (10).

3. An agricultural vehicle as claimed in claim 1 or 2, **characterised in that** the valve (64) is manually operated by means of a mechanical linkage (72).

4. An agricultural vehicle as claimed in claim 1 or 2, **characterised in that** the valve (64) is electrically operated.

5. An agricultural vehicle as claimed in any preceding claim, **characterised in that** the piston (58) of the jack (50) has faces of equal size.

6. An agricultural vehicle as claimed in claim 5, **characterised in that** the actuating rod (60) is connected to one side of the piston (58) and a dummy rod (66) of the same size as the actuating rod (60) is connected to the opposite side of the piston (58).

7. An agricultural vehicle as claimed in any of claims 1 to 4, **characterised in that** the piston (158) is a differential piston having faces of different size, and a buffer fluid reservoir or accumulator (180) is provided to take up or supply the net difference between the change in volume of the two working chambers (154, 156)during a displacement of the piston (158).

8. An agricultural vehicle as claimed in any preceding claim, **characterised in that** one or more springs are provided to bias the lower hitch arms (10) into a central position.

9. An agricultural vehicle as claimed in claim 8, **characterised in that** the biasing spring is combined with the double acting jack (50) in a single unit.
